# FASCICULE DE BREVET EUROPEEN

(11) **EP 2 672 135 B1**
(45) Date de publication et mention de la délivrance du brevet: **20.08.2014**
(21) Numéro de dépôt: 13168313.8
(22) Date de dépôt: 17.05.2013
(51) Int. Cl.: F16D 21/06

(54) **Mécanisme de double embrayage à trois plateaux**
Doppelkupplungsmechanismus mit drei Scheiben
Dual-clutch mechanism with three plates

(30) Priorité: 04.06.2012 FR 1255189
(43) Date de publication de la demande: 11.12.2013
(73) Titulaire: Valeo Embrayages, 80009 Amiens Cedex 2 (FR)
(72) Inventeur: Miot, Maxime, 80000 AMIENS (FR); Maurel, Hervé, 80000 AMIENS (FR)
(74) Mandataire: Tran, Chi-Hai

(56) Documents cités:
- DE-A1-102009 016 002
- DE-A1-102010 025 408
- DE-A1-102010 032 867
- DE-A1-102010 045 792
- FR-A1- 2 950 120
- US-A1- 2003 079 953

## Description

### DOMAINE TECHNIQUE DE L'INVENTION

L'invention se rapporte à un mécanisme de double embrayage à trois plateaux, notamment pour une chaîne cinématique de transmission de véhicule automobile.

### ETAT DE LA TECHNIQUE ANTERIEURE

Dans le document FR 2 919 696 est décrit un mécanisme de double embrayage à diaphragmes destiné à accoupler un arbre moteur avec sélectivement l'un ou l'autre de deux arbres menés coaxiaux. Ce mécanisme de double embrayage comporte un plateau central solidaire d'un carter tournant entraîné par le double volant d'inertie, et, de part et d'autre du plateau central, à l'intérieur du carter tournant, deux plateaux de pression et deux disques de friction interposés entre les plateaux de pression et le plateau central. Les disques de friction sont reliés chacun à une extrémité cannelée d'un des arbres menés. Le mécanisme comporte deux diaphragmes annulaires destinés chacun à l'actionnement d'un des deux plateaux de pression. Chaque diaphragme est entraîné par une butée tournante mobile en translation axiale. Les butées tournantes ont un diamètre réduit et sont en appui contre un pourtour radial intérieur des diaphragmes. Ces derniers s'étendent radialement vers l'extérieur pour trouver un appui d'une part sur le plateau de pression correspondant et d'autre part sur un couvercle fixé au plateau central, afin d'agir par un effet levier entre les trois appuis. Les appuis sur le plateau central et sur les plateaux de pression étant éloignés de l'appui sur la butée et proche l'un de l'autre, les diaphragmes induisent une forte démultiplication, de sorte que la course axiale des butées tournantes doit être importante pour réaliser le déplacement souhaité des disques de friction. Cette course axiale des butées tournantes est encore accrue par l'élasticité des diaphragmes. L'encombrement axial d'un tel mécanisme est donc nécessairement important.

Dans le document WO 2010/006579 est illustré un mécanisme de double embrayage à commande directe disposé dans une chaîne cinématique de transmission entre un double volant d'inertie entraîné par le vilebrequin d'un moteur à combustion interne et une boîte de transmission à deux arbres d'entrée coaxiaux. Ce mécanisme de double embrayage comporte un plateau central solidaire d'un carter tournant entraîné par le double volant d'inertie, et, de part et d'autre du plateau central, à l'intérieur du carter tournant, deux plateaux de pression et deux disques de friction interposés entre les plateaux de pression et le plateau central. Les disques de friction sont reliés chacun à une extrémité cannelée d'un des arbres d'entrée de la boîte de transmission. Les plateaux de pression sont quant à eux entraînés chacun par un piston annulaire d'un sous-ensemble de commande hydraulique qui présente en outre un bâti dans lequel sont formées deux chambres hydrauliques, dans chacune desquelles coulisse l'un des pistons. Du fait de leur disposition de part et d'autre du plateau central, les plateaux de pression doivent être déplacés dans des directions opposées pour presser les disques de friction contre le plateau central. Il s'ensuit que les pistons de commande sont également disposés en sens opposés, c'est-à-dire chacun de manière à travailler en se déplaçant dans le sens axial du plateau de pression correspondant. Le type de sous-ensemble de commande nécessaire présente un encombrement axial important du fait de sa géométrie particulière, et est tout à fait spécifique à l'architecture décrite de double embrayage à trois plateaux.

On connaît par ailleurs des mécanismes de double embrayage à quatre plateaux à commande directe, tels que décrits par exemple dans le document WO 2011/076 170. Suivant cette architecture, les plateaux de pression sont mus en translation dans le même sens, ce qui permet de commander le mécanisme avec un sous-ensemble hydraulique présentant deux pistons travaillant dans le même sens. Mais le gain d'encombrement axial obtenu au niveau de la commande hydraulique est obtenu au prix d'un encombrement, notamment axial, plus important du mécanisme dans son ensemble, du fait de la présence du quatrième plateau.

L'état de la technique le plus proche est considéré le document DE102010032867.

### EXPOSE DE L'INVENTION

L'invention vise à remédier aux inconvénients de l'état de la technique et à proposer un mécanisme de double embrayage présentant un encombrement axial réduit.

Pour ce faire est proposé, selon un premier aspect de l'invention, un mécanisme de double embrayage comportant un plateau central tournant autour d'un axe géométrique de référence ainsi qu'un premier et un deuxième plateaux de pression situés axialement de part et d'autre du plateau central. Les plateaux de pression sont mobiles en translation parallèlement à l'axe de référence entre une position débrayée et une position embrayée. Le premier plateau de pression est solidaire en translation d'un premier organe de commande. Ce premier plateau est donc commandé suivant le principe de la commande directe, sans interposition de diaphragme, donc sans démultiplication et sans déformation élastique de pièce intermédiaire, ce qui permet une minimisation de la course axiale du premier organe de commande. Le deuxième plateau de pression est lié cinématiquement à un deuxième organe de commande mobile en translation parallèlement à l'axe de référence. Le mécanisme est pourvu en outre d'au moins un organe d'inversion pour transformer un déplacement du deuxième organe de commande dans une première direction axiale en un déplacement du deuxième plateau de pression dans une deuxième direction axiale opposée à la première. Grâce à cet organe d'inversion, il est possible de commander ce mécanisme de double embrayage à trois plateaux avec deux organes de commande, par exemples des vérins hydrauliques, travaillant tous les deux dans le même sens, c'est-à-dire fournissant un travail moteur lorsqu'ils se déplacent dans la même direction. Contrairement aux organes de commande qui sont préférentiellement disposées à proximité de l'axe de rotation pour en limiter le diamètre et le coût, le ou les organes d'inversion peuvent être disposés à plus grande distance de l'axe, avec une plus grande liberté de positionnement, sans augmenter notablement l'encombrement axial. Selon ce premier aspect de l'invention, l'organe d'inversion se trouve d'un côté du plateau central opposé aux premier et deuxième organes de commande, et de préférence d'un côté du plateau central opposé aux deux organes de commande. On peut toutefois également envisager que le ou les organes d'inversion soient disposés axialement du même côté du plateau central que les organes de commande.

Suivant un mode de réalisation préféré, le ou les organes d'inversion sont rigides, c'est-à-dire sans déformation, ou sans déformation notable, en cours de fonctionnement, de sorte que la course du deuxième organe de commande soit intégralement transmise au deuxième plateau de pression. Si une élasticité est malgré tout souhaitée, par exemple pour un découplage vibratoire entre le deuxième plateau de pression et le deuxième organe de commande, on veille de préférence malgré tout à ce que la course de l'organe de pression nécessaire pour compenser la déformation du ou des organes d'inversion reste inférieure à 20%, de préférence inférieure à 10% de la course du deuxième organe de commande. Ces dispositions permettent de limiter la course axiale du deuxième organe de commande, et permettent de diminuer encore davantage l'encombrement axial du mécanisme.

Préférentiellement, les premier et deuxième organes de commande sont disposés axialement d'un même côté du plateau central et des plateaux de pression, par exemple du côté destiné à être monté sur le carter de la boîte de transmission. Il est alors possible de faire en sorte que le premier organe de commande et le deuxième organe de commande se déplacent dans la même direction pour déplacer respectivement les premier et deuxième plateaux de pression de leur position débrayée vers leur position embrayée.

Un élément de transmission du mouvement mobile axialement peut être prévu pour transmettre le mouvement entre le deuxième organe de commande et l'organe d'inversion. Cet élément de transmission est de préférence rigide, c'est-à-dire sans déformation notable en fonctionnement. Cet élément de transmission, de préférence solidaire en translation du deuxième organe de commande, permet une grande liberté de positionnement du ou des organes d'inversion, indépendamment du positionnement du deuxième organe de commande. Elle permet notamment de choisir librement le rapport d'amplification et les points d'application du ou des organes d'inversion.

L'organe d'inversion présente un rapport de réduction ou d'amplification cinématique qui peut être constant ou variable, par exemple pour permettre un début de course rapide lorsque l'effort résistant est faible, puis une démultiplication de l'effort lorsque le contact est établi à l'approche de la position embrayée.

Suivant un mode de réalisation, l'organe d'inversion comporte au moins un levier inverseur ayant une zone de pivotement, fixe ou variable, en appui contre un support et deux bras de part et d'autre de la zone de pivotement. Suivant un mode de réalisation, la zone de fixation sera de préférence en appui contre un élément fixe en translation par rapport au plateau central et/ou par rapport à un référentiel fixe.

Selon un mode de réalisation, l'organe d'inversion peut comporter au moins un levier d'amplification ou de réduction ayant une articulation d'extrémité en appui contre un support fixe en translation. Ce levier peut notamment constituer un appui pour la zone de pivotement d'un levier inverseur.

Suivant un autre mode de réalisation, l'organe d'inversion comporte au moins un inverseur hydraulique, qui peut avoir un rapport d'amplification de la pression appliquée supérieur, égal ou inférieur à 1, constant ou variable.

Suivant un mode de réalisation, le mécanisme comporte une pluralité d'organes d'inversion distribués, et de préférence équirépartis, autour de l'axe de référence. L'impératif est naturellement d'assurer un mouvement axial de translation sans basculement parasite des plateaux de pression. En répartissant plusieurs organes d'inversion autour de l'axe de référence, on peut obtenir la qualité de guidage recherchée avec des organes d'inversion de faibles dimensions et de faible masse. Suivant les contraintes particulières de chaque application, et notamment les dimensions des plateaux, une telle pluralité d'organes d'inversion offre une liberté de positionnement supplémentaire et est susceptible de réaliser un meilleur compromis qu'un organe d'inversion unique.

Préférentiellement, le plateau central est fixe en translation par rapport à un référentiel fixe. Il peut être notamment solidaire d'un support du ou des organes d'inversion. Le plateau central est destiné à être relié cinématiquement au vilebrequin d'un moteur par l'intermédiaire d'un volant amortisseur simple ou double. En particulier, le plateau central peut être directement solidaire d'un organe de liaison à un volant moteur simple ou double.

Le mécanisme de double embrayage peut comporter en outre un premier disque de friction interposé entre le premier plateau de pression et le plateau central et un deuxième disque de friction interposé entre le deuxième plateau de pression et le plateau central. Suivant un mode de réalisation, le premier disque de friction est solidaire en rotation d'un premier arbre de transmission, le deuxième disque de friction est solidaire en rotation d'un deuxième arbre de transmission, l'un des premier et deuxième arbres étant un arbre creux à l'intérieur duquel une partie au moins de l'autre des premier et deuxième arbres est disposée. Cette disposition est particulièrement adaptée à l'entraînement d'une boîte de transmission à deux arbres d'entrée.

Avantageusement, le plateau central peut être monté sur une première bague de roulement, de préférence une bague extérieure, d'un palier à roulement présentant au moins une deuxième bague de roulement, de préférence intérieure, montée sur l'un des premier et deuxième arbres. Le palier à roulement peut être à une ou plusieurs rangées de corps roulants.

Une première butée tournante peut être interposée cinématiquement entre le premier organe de commande et le premier plateau de pression, permettant ainsi au premier organe de commande d'être fixe en rotation dans un repère fixe.

De même, une deuxième butée tournante peut être interposée cinématiquement entre le deuxième organe de commande et le deuxième plateau de pression. Le ou les organes d'inversion sont de préférence disposés cinématiquement entre la deuxième butée tournante et le deuxième plateau de pression, ce qui permet une grande liberté de positionnement. Toutefois, il est également possible de positionner l'organe d'inversion cinématiquement entre le deuxième organe moteur et la deuxième butée tournante, ce qui allège l'équipage tournant et diminue son moment d'inertie, puisque l'organe d'inversion peut alors être fixe en rotation.

Les butées tournantes mentionnées ci-dessus sont de préférence des butées à roulement. L'une des première et deuxième butées tournantes peut être disposée radialement à l'extérieur de l'autre. Il s'agit de manière préférentielle de la deuxième butée tournante, qui est reliée à l'organe ou aux organes d'inversion par l'intermédiaire d'un ensemble de poussée pouvant former un couvercle de poussée.

Suivant un mode de réalisation, le mécanisme comporte en outre un sous-ensemble hydraulique de commande, comportant un bâti formant une première et une deuxième chambres annulaires coaxiales, un premier piston annulaire coulissant axialement dans la première chambre dans la première direction pour entraîner la première butée tournante dans la première direction, et un deuxième piston coulissant axialement dans la deuxième chambre dans la première direction pour entraîner la deuxième butée tournante dans la première direction. Dans cette hypothèse, le premier organe de commande est formé par la première butée tournante et le premier piston, alors que le deuxième organe de commande est constitué par la deuxième butée tournante et le deuxième piston.

L'invention a vocation à s'appliquer aussi bien à des embrayages normalement ouverts qu'à des embrayages normalement fermés. Dans un cas comme dans l'autre seront mis en oeuvre des moyens de rappel élastique qui rappelleront les disques de friction soit vers leur position d'embrayage (embrayage normalement fermé), soit vers leur position de débrayage (embrayage normalement ouvert).

Suivant un autre aspect de l'invention spécifique d'un embrayage normalement ouvert, celle-ci a trait à un mécanisme de double embrayage comportant un plateau central tournant autour d'un axe géométrique de référence, un premier et un deuxième plateaux de pression situés axialement de part et d'autre du plateau central, le premier plateau de pression étant mobile dans une première direction axiale vers le plateau central d'une position débrayée à une position embrayée, le deuxième plateau de pression étant mobile vers le plateau central dans une deuxième direction axiale opposée à la première direction axiale, d'une position débrayée à une position embrayée, le premier plateau de pression étant entraîné dans au moins une des premières et deuxième direction axiale par une première butée tournante se déplaçant dans la même direction axiale, le deuxième plateau de pression étant entraîné dans la deuxième direction axiale par une deuxième butée tournante, **caractérisé en ce qu'il** comporte en outre au moins un organe d'inversion pour transformer un déplacement de la deuxième butée tournante dans la première direction axiale en un déplacement du deuxième plateau de pression dans la deuxième direction axiale.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe axiale d'un mécanisme de double embrayage à trois plateau selon un mode de réalisation de l'invention, dans une position de repos débrayée ;
- la figure 2, une vue du mécanisme de la figure 1, suivant un autre plan de coupe axial décalé angulairement par rapport au plan de la figure 1 ;
- la figure 3, une vue partielle de face d'un organe d'inversion du mécanisme de la figure 1 ;
- la figure 4, une vue schématique d'un organe d'inversion selon un autre mode de réalisation de l'invention ;
- la figure 5, une vue schématique d'un organe d'inversion selon un autre mode de réalisation de l'invention ;
- la figure 6, une vue schématique d'un organe d'inversion selon un autre mode de réalisation de l'invention ;
- la figure 7, une vue schématique d'un organe d'inversion selon un autre mode de réalisation de l'invention ;
- la figure 8, une vue partielle de face d'un organe d'inversion selon un autre mode de réalisation de l'invention ;
- la figure 9, une vue partielle de face d'un organe d'inversion selon un autre mode de réalisation de l'invention ;
- la figure 10, une vue partielle de face d'un organe d'inversion selon un autre mode de réalisation de l'invention ;
- la figure 11, une vue en coupe axiale d'un mécanisme de double embrayage à trois plateau selon un autre mode de réalisation de l'invention, dans une position de repos débrayée.

Pour plus de clarté, les éléments identiques sont repérés par des signes de référence identiques sur l'ensemble des figures.

### DESCRIPTION DETAILLEE D'UN MODE DE REALISATION

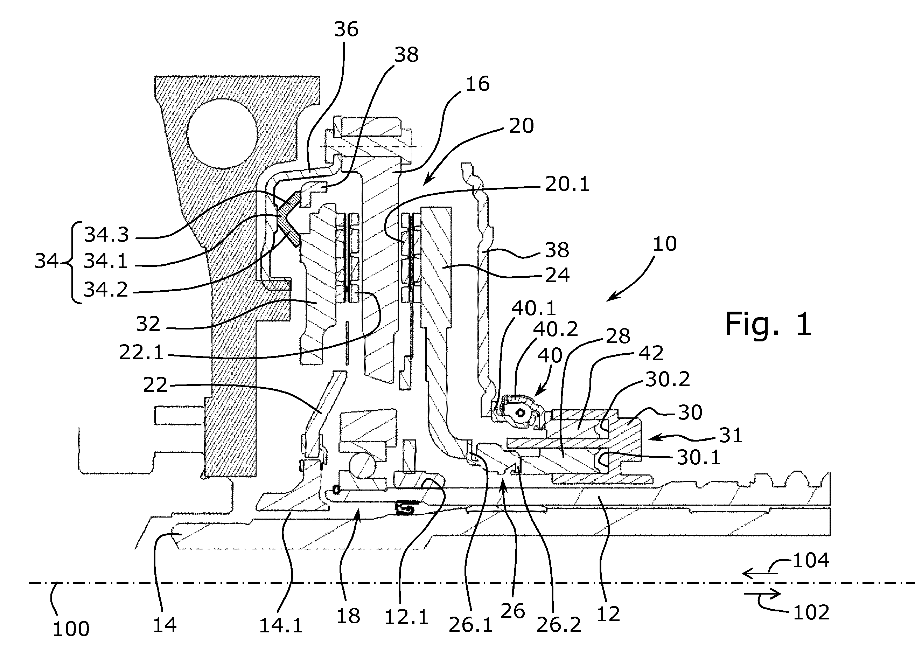

Sur la figure **1** est illustré un mécanisme de double embrayage à trois plateaux à actionnement direct **10** interposé entre un vilebrequin ou un élément de filtration des vibrations de rotation associé à un vilebrequin d'une part, et une boîte de transmission à deux arbres d'entrée coaxiaux **12, 14** d'autre part. L'embrayage présente un plateau central **16** monté tournant sur l'un des arbres **12, 14** par l'intermédiaire d'un palier à roulement **18.** En l'occurrence, un premier **(12)** des deux arbres est creux et entoure le deuxième **(14)** et, dans cet exemple de réalisation, c'est sur cet arbre creux extérieur **12** qu'est monté le palier à roulement **18.** L'axe géométrique de rotation **100** des deux arbres et du plateau central est pour l'ensemble du mécanisme un axe géométrique de référence, et l'on parlera de direction axiale pour désigner une direction parallèle à l'axe de référence.

L'arbre creux **12** présente une portion cannelée **12.1** sur laquelle est montée un premier disque de friction **20** du mécanisme. De façon similaire, un deuxième disque de friction **22** est monté sur une portion cannelée **14.1** du deuxième arbre **14.** Ces portions cannelées **12.1, 14.1** assurent une solidarisation en rotation, mais une liberté de translation axiale de chaque disque de friction **20, 22** par rapport à l'arbre associé **12,** resp. **14.** Les disques de friction **20, 22** sont disposés axialement de part et d'autre du plateau central **16.** Ils sont pourvus chacun, de surfaces de friction **20.1, 22.1** directement en regard du plateau central **16** et destinées à venir en contact avec celui-ci.

Le premier disque de friction **20** est interposé entre le plateau central **16** et un premier plateau de pression **24** solidaire d'une bague **26.1,** ici une bague intérieure, d'une première butée à roulement **26** dont l'autre bague **26.2,** ici extérieure, est solidarisée à un premier organe de commande constitué par un premier piston **28** coulissant dans une première chambre **30.1** d'un bâti **30** d'une commande hydraulique **31.** Ce bâti **30,** de forme annulaire entoure les arbres **12, 14** et est monté de préférence sur le couvercle ou le corps de la boîte de transmission (non représenté), ou sur tout autre élément fixe.

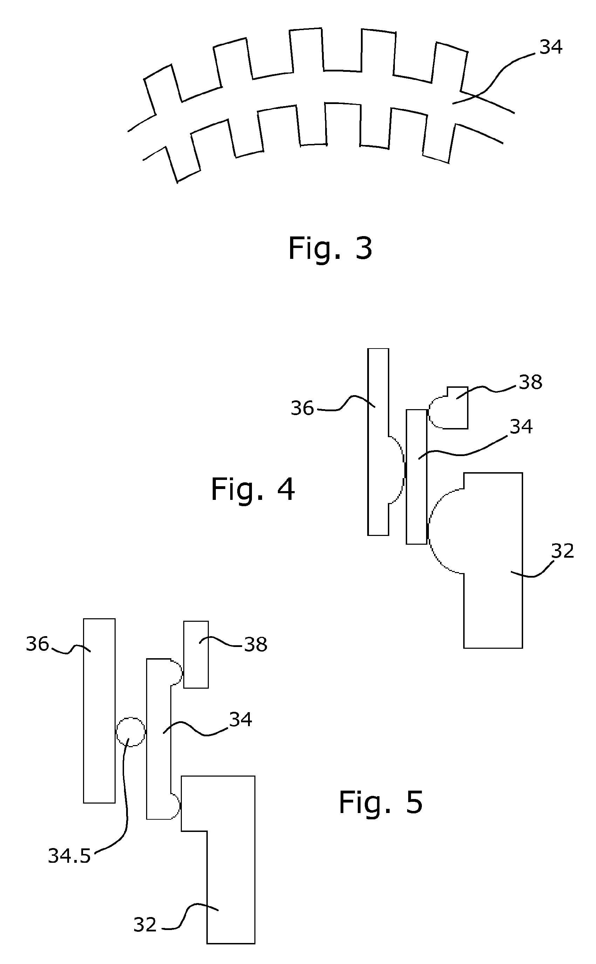

De manière similaire, le deuxième disque de friction **22** est interposé entre le plateau central **16** et un deuxième plateau de pression **32.** Ce dernier est actionné par un organe d'inversion cinématique **34** constitué par un levier inverseur présentant une portion médiane formant pivot **34.1** et deux portions d'extrémité formant des bras **34.2, 34.3** de part et d'autre du pivot **34.1.** Le pivot médian **34.1** est en appui sur un support **36** solidaire du plateau central **16** alors que le bras **34.2** est en appui contre le deuxième plateau de pression **32** et que le bras **34.3** est en appui contre un couvercle de poussée **38.** En vue de face sur la figure **3****,** le levier inverseur **34** présente une forme de couronne. Le levier inverseur **34** peut être centré par des pions ou rivets de centrage, des ergots ou des formes spécifiques positionnés sur le support **36,** le plateau de pression **32** et/ou l'ensemble de poussée **38.**

Le couvercle de poussée **38** est monté sur une bague **40.1,** ici extérieure, d'une deuxième butée à roulement **40** dont l'autre bague **40.2,** ici intérieure, est solidarisée à un deuxième organe de commande constitué par un deuxième piston **42** coulissant dans une deuxième chambre **30.2** du bâti **30** du sous-ensemble de commande hydraulique **31.**

Le mécanisme fonctionne de la manière suivante.

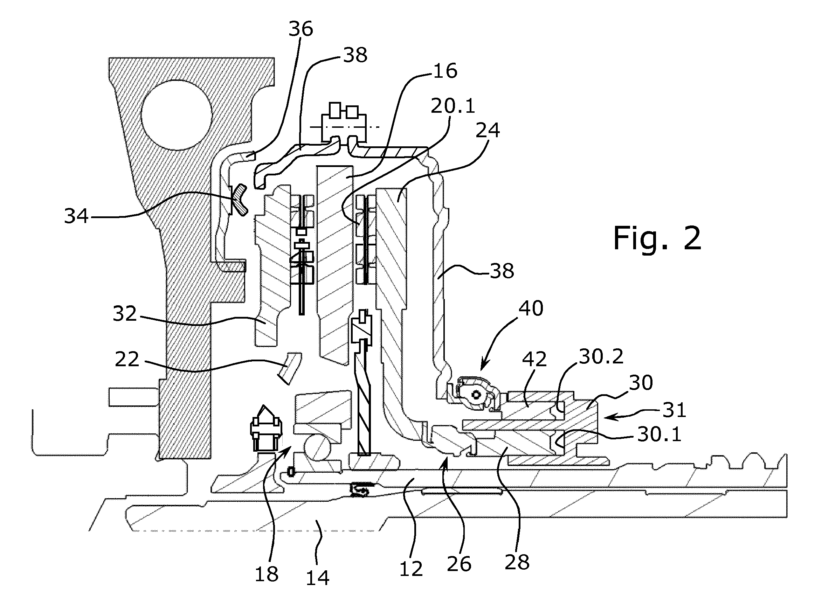

Au repos dans la position illustrée sur les figures **1** et **2****,** des organes de rappel élastique (non représentés) maintiennent les plateaux de pression **24, 32** en position débrayée de sorte qu'aucun couple ne peut être transmis du plateau central **16** aux arbres **12** et **14.** Les pistons **28, 42** sont au repos dans une position réduisant au minimum le volume des chambres **30.1, 30.2.**

Pour embrayer sur le premier arbre **12,** la chambre **30.1** est alimentée en pression, conduisant à la translation dans une première direction axiale **102** du premier piston **28,** de la première butée **26** et du premier plateau de pression **24** qui met le premier disque de friction **20** en position embrayée en appui contre le plateau central **16,** de sorte que le premier arbre **12,** solidaire en rotation du premier disque de friction **20** est entraîné par le plateau central **16.**

Le débrayage est obtenu en relâchant la pression dans la chambre **30.1,** ce qui permet au moyens de rappel élastique de ramener l'équipage mobile constitué par le premier disque de friction **20,** le premier plateau de pression **24,** la première butée à roulement **26** et le premier piston **28** vers la position débrayée initiale.

Pour embrayer sur le deuxième arbre **14,** la chambre **30.2** est alimentée en pression, conduisant à la translation dans la première direction axiale **102** du deuxième piston **42,** de la deuxième butée **40** et du couvercle de poussée **38.** Ce dernier agit sur le bras **34.3** du levier inverseur **34,** le faisant pivoter autour de son pivot **34.1,** de sorte que le bras **34.2** entraîne le deuxième plateau de pression **24** dans la direction **104** vers le plateau central, ce qui met le deuxième disque de friction **22** en position embrayée en appui contre le plateau central **16,** permettant la transmission de couple entre le deuxième arbre **14,** solidaire en rotation du deuxième disque de friction **22** et le plateau central **16.**

Le débrayage est obtenu en relâchant la pression dans la chambre **30.2,** ce qui permet au moyens de rappel élastique de ramener le deuxième plateau de pression **32** et, par conséquent, le levier inverseur **34,** la deuxième butée à roulement **40** et le deuxième piston **42** vers leur position débrayée initiale.

De nombreuses variantes sont envisagées.

On peut prévoir que le mécanisme d'embrayage soit normalement fermé, auquel cas les moyens de rappel élastique sont disposés de manière à rappeler les disques de friction vers la position embrayée, le sous-ensemble de commande hydraulique **31** étant positionné de manière à entraîner les disques de friction dans leur position de débrayage.

Les moyens de rappel élastique peuvent inclure des languettes élastiques entre le plateau central **16** et l'ensemble de poussée **38.** Chaque plateau de pression peut disposer d'un jeu de languettes élastiques.

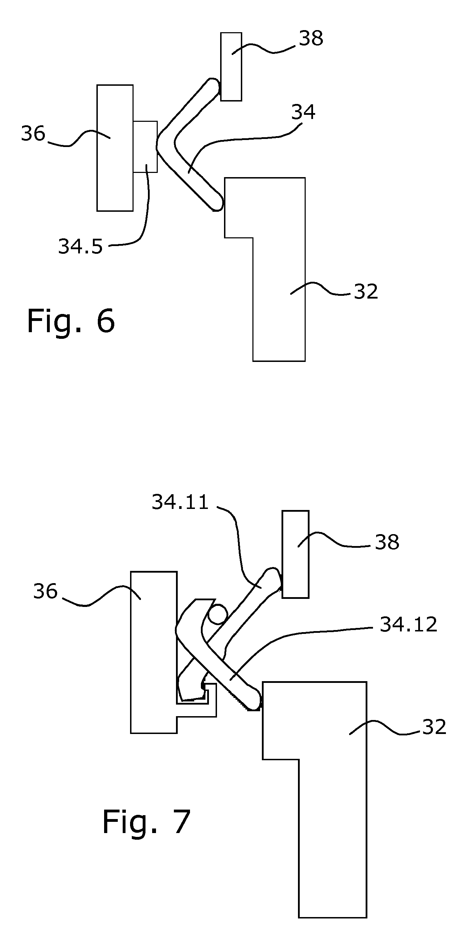

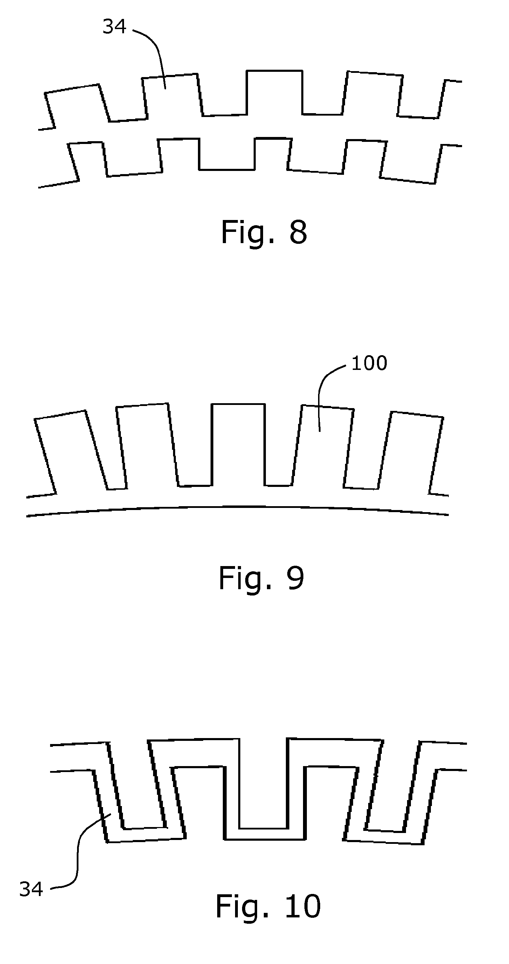

L'organe d'inversion cinématique peut être réalisé de multiples manières. Une première variante est illustrée sur la figure **4****,** qui présente un levier **34** roulant sur un appui de forme arrondie **36,** de sorte que le rapport d'amplification entre les deux bras du levier **34** varie au cours du pivotement de celui-ci. Une deuxième variante mettant en oeuvre un jonc **34.4** intermédiaire entre le support **36** et le levier **34** est présenté sur la figure **5****.** Une troisième variante mettant en oeuvre un patin de glissement **34.5** est illustrée sur la figure **6****.** La variante de la figure **7** met en oeuvre un levier démultiplicateur **34.11** et un levier inverseur **34.12.** Le levier démultiplicateur **34.11** pivote par rapport au support par une extrémité, l'autre étant en appui contre le couvercle de poussée **38,** et vient actionner un bras du levier inverseur **34.12** par un point de contact intermédiaire. Comme illustré dans les différents exemples, les contacts entre le levier inverseur et les différentes pièces peuvent être réalisés par des rayons, des développantes de cercle, ou des pièces intermédiaires (jonc, patin de glissement). Les figures **8** à **10** illustrent quant à elles différentes découpes possibles du levier inverseur **34.** Il est également possible de prévoir plusieurs leviers inverseurs indépendants répartis, préférentiellement de manière régulière, autour de l'axe de référence.

De préférence, le rapport d'amplification de l'effort de l'organe d'inversion sera tel qu'en position embrayée stable, la résultante de l'effort au contact entre l'ensemble de poussée **34.2** et le bras **34.3** du levier soit inférieure à la résultante de l'effort au contact entre le bras **34.2** du levier et le deuxième plateau de poussée, ceci pour limiter les efforts sur la butée tournante **40.**

On peut également prévoir que l'organe d'inversion ait une raideur faible par rapport aux autres éléments de la liaison entre le deuxième plateau de poussée **32** et la deuxième butée tournante **40,** ceci afin de contrôler les efforts transmis à la butée.

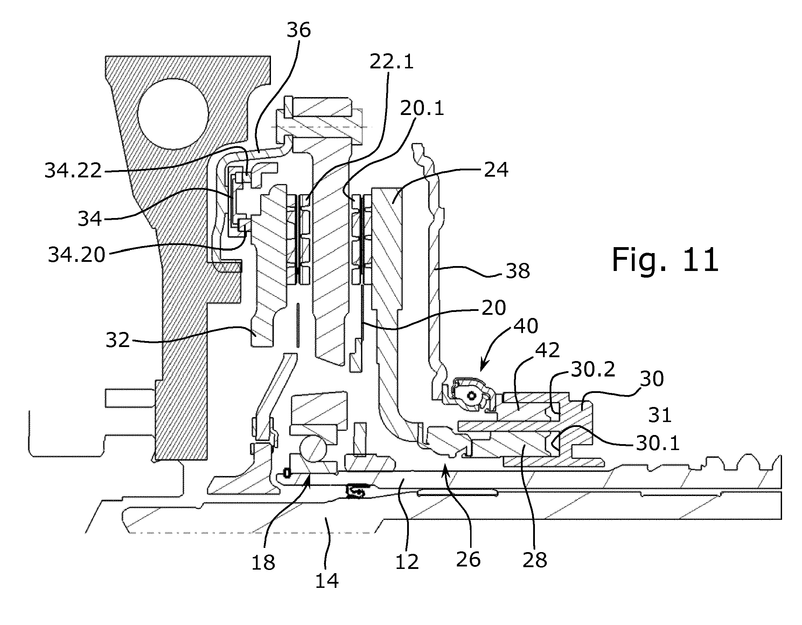

L'organe d'inversion **34** peut également être constitué par un dispositif hydraulique comme représenté sur la figure **11****.** On peut prévoir un organe d'inversion hydraulique unique annulaire centré sur l'axe de référence **100,** ou une pluralité d'organes d'inversion hydraulique indépendants. Cet organe d'inversion hydraulique présente par exemple un piston **34.20** en appui contre le plateau de poussée **32** et un piston **34.22** en appui contre l'ensemble de poussée 38. Le rapport des surfaces des deux pistons détermine alors le rapport de démultiplication de l'organe d'inversion qui, comme dans les autres modes de réalisation, peut être choisi inférieur, égal ou supérieur à 1.

L'organe d'inversion 34 peut être supporté par un support **36** solidaire du plateau central **16** ou d'un volant de filtration disposé entre le vilebrequin et le plateau central, ou par toute autre pièce solidaire en translation et en rotation du plateau central ou d'un tournant avec le plateau central **16.** Le plateau central **16** peut être monté rotatif sur le premier ou le deuxième arbre de transmission **12, 14** ou sur tout autre élément fixe en translation. Les disques de friction **20, 22** peuvent être en une ou plusieurs pièces, par exemple avec un moyeu amovible. Le couvercle de poussée peut être remplacé par tout autre pièce ou ensemble de pièces de liaison entre la butée **40** et l'organe d'inversion cinématique. Il peut présenter des formes permettant d'augmenter la raideur axiale, en particulier des nervures. Il peut également présenter des ouvertures destinées à faciliter la ventilation du mécanisme.

L'organe d'inversion cinématique peut être placé du même côté du plateau central que les butées tournantes **26, 40.**

## Revendications

1. Mécanisme de double embrayage (10) comportant un plateau central (16) tournant autour d'un axe géométrique de référence (100), un premier et un deuxième plateaux de pression (24, 32) situés axialement de part et d'autre du plateau central (16), les premier et deuxième plateaux de pression (24, 32) étant mobiles axialement en translation par rapport au plateau central entre une position débrayée et une position embrayée, le premier plateau de pression (24) étant solidaire en translation axiale d'un premier organe de commande, le deuxième plateau de pression (32) étant lié cinématiquement à un deuxième organe de commande, ledit mécanisme comporte en outre au moins un organe d'inversion (34) pour transformer un déplacement en translation du deuxième organe de commande dans une première direction axiale en un déplacement du deuxième plateau de pression (32) dans une deuxième direction axiale opposée, **caractérisé en ce que** l'organe d'inversion se trouve d'un côté du plateau central opposé aux premier et deuxième organes de commande.

2. Mécanisme de double embrayage selon la revendication 1, **caractérisé en ce que** le premier organe de commande (28) et le deuxième organe de commande (42) se trouvent axialement d'un même côté du plateau central (16).

3. Mécanisme de double embrayage selon la revendication 2, **caractérisé en ce que** le premier organe de commande (28) et le deuxième organe de commande (42) se déplacent dans la même direction pour déplacer respectivement les premier et deuxième plateaux de pression (24, 32) de leur position débrayée vers leur position embrayée.

4. Mécanisme de double embrayage selon l'une quelconque des revendications 1 à 3, **caractérisé en ce qu'**il comporte un élément de transmission du mouvement (38) mobile axialement pour transmettre le mouvement entre le deuxième organe de commande et l'organe d'inversion (34).

5. Mécanisme de double embrayage selon l'une quelconque des revendications 1 à 4, **caractérisé en ce que** l'organe d'inversion (34) présente un rapport de réduction ou d'amplification cinématique constant.

6. Mécanisme de double embrayage selon l'une quelconque des revendications 1 à 4, **caractérisé en ce que** l'organe d'inversion (34) présente un rapport de réduction ou d'amplification cinématique variable.

7. Mécanisme de double embrayage selon l'une quelconque des revendications 1 à 6, **caractérisé en ce que** l'organe d'inversion (34) comporte au moins un levier.

8. Mécanisme de double embrayage selon l'une quelconque des revendications 1 à 7, **caractérisé en ce que** l'organe d'inversion comporte au moins un levier d'amplification ou de réduction (34.11) ayant une articulation d'extrémité en appui contre un support fixe en translation (38).

9. Mécanisme de double embrayage selon la revendication 1 à 7, **caractérisé en ce que** l'organe d'inversion (34) comporte au moins un inverseur hydraulique.

10. Mécanisme de double embrayage selon l'une quelconque des revendications 1 à 9, **caractérisé en ce qu'il** comporte une pluralité d'organes d'inversion distribués, et de préférence équirépartis, autour de l'axe de référence.

11. Mécanisme de double embrayage selon l'une quelconque des revendications précédentes, **caractérisé en ce que** le plateau central (16) est fixe en translation par rapport à un référentiel fixe.

12. Mécanisme de double embrayage selon la revendication 11, **caractérisé en ce que** le plateau central (16) est solidaire d'un organe de liaison à un volant moteur simple ou double.

13. Mécanisme de double embrayage selon l'une quelconque des revendications précédentes, comportant en outre un premier disque de friction (20) interposé entre le premier plateau de pression (24) et le plateau central (16), un deuxième disque de friction (22) interposé entre le deuxième plateau de pression (32) et le plateau central (16), **caractérisé en ce que** le premier disque de friction (20) est solidaire en rotation d'un premier arbre (12), le deuxième disque de friction (22) est solidaire en rotation d'un deuxième arbre (14), l'un des premier et deuxième arbres étant un arbre creux (12) à l'intérieur duquel une partie au moins de l'autre (14) des premier et deuxième arbres est disposée.

14. Mécanisme de double embrayage selon la revendication 13, **caractérisé en ce que** le plateau central (16) est monté sur l'un des premier et deuxième arbres par l'intermédiaire d'un palier (18).

15. Mécanisme de double embrayage selon l'une quelconque des revendications précédentes, **caractérisé en ce qu'il** comporte une première butée tournante (26) interposée cinématiquement entre le premier organe de commande (28) et le premier plateau de pression (24).

16. Mécanisme de double embrayage selon l'une quelconque des revendications précédentes, **caractérisé en ce qu'il** comporte une deuxième butée tournante (40) interposée cinématiquement entre le deuxième organe de commande (42) et le deuxième plateau de pression (24).

17. Mécanisme de double embrayage selon les revendications 15 et 16, **caractérisé en ce que** l'une des première et deuxième butées tournantes est disposée radialement à l'extérieur de l'autre.

18. Mécanisme de double embrayage selon les revendications 16 et 17, **caractérisé en ce qu'il** comporte en outre un sous-ensemble hydraulique de commande (31), comportant un bâti (30) formant une première et une deuxième chambres annulaires coaxiales (30.1, 30.2), un premier piston annulaire (28) coulissant axialement dans la première chambre (30.1) et solidaire en translation de la première butée tournante (26), et un deuxième piston (42) coulissant axialement dans la deuxième chambre (3.2) et solidaire en translation de la deuxième butée tournante (40).

## Patentansprüche

1. Doppelkupplungsmechanismus (10), umfassend eine sich um eine geometrische Referenzachse (100) drehende zentrale Platte (16), eine erste und eine zweite Druckplatte (24, 32), die axial auf beiden Seiten der zentralen Platte (16) angeordnet sind, wobei die erste und zweite Druckplatte (24, 32) relativ zu der zentralen Platte zwischen einer ausgekuppelten Position und einer eingekuppelten Position axial translatorisch beweglich sind, wobei die erste Druckplatte (24) axial translatorisch fest mit einem ersten Steuerorgan verbunden ist, wobei die zweite Druckplatte (32) kinematisch mit einem zweiten Steuerorgan verbunden ist, wobei der besagte Mechanismus außerdem mindestens ein Inversionsorgan (34) zur Umformung einer translatorischen Verlagerung des zweiten Steuerorgans in einer ersten axialen Richtung in eine Verlagerung der zweiten Druckplatte (32) in eine zweite entgegen gesetzte axiale Richtung umfasst, **dadurch gekennzeichnet, dass** das Inversionsorgan sich auf einer Seite der zentralen Platte befindet, die entgegen gesetzt zu dem ersten und zweiten Steuerorgan ist.

2. Doppelkupplungsmechanismus nach Anspruch 1, **dadurch gekennzeichnet, dass** das erste Steuerorgan (28) und das zweite Steuerorgan (42) sich axial auf der gleichen Seite der zentralen Platte (16) befinden.

3. Doppelkupplungsmechanismus nach Anspruch 2, **dadurch gekennzeichnet, dass** das erste Steuerorgan (28) und das zweite Steuerorgan (42) sich in der gleichen Richtung verlagern, um jeweils die erste und zweite Druckplatte (24, 32) von ihrer ausgekuppelten Position in ihre eingekuppelte Position zu verlagern.

4. Doppelkupplungsmechanismus nach einem der Ansprüche 1 bis 3, **dadurch gekennzeichnet, dass** er ein axial bewegliches Bewegungsübertragungselement (38) umfasst, um die Bewegung zwischen dem zweiten Steuerorgan und dem Inversionsorgan (34) zu übertragen.

5. Doppelkupplungsmechanismus nach einem der Ansprüche 1 bis 4, **dadurch gekennzeichnet, dass** das Inversionsorgan (34) ein konstantes Verhältnis der kinematischen Reduzierung oder Verstärkung aufweist.

6. Doppelkupplungsmechanismus nach einem der Ansprüche 1 bis 4, **dadurch gekennzeichnet, dass** das Inversionsorgan (34) ein veränderliches Verhältnis der kinematischen Reduzierung oder Verstärkung aufweist.

7. Doppelkupplungsmechanismus nach einem der Ansprüche 1 bis 6, **dadurch gekennzeichnet, dass** das Inversionsorgan (34) mindestens einen Hebel umfasst.

8. Doppelkupplungsmechanismus nach einem der Ansprüche 1 bis 7, **dadurch gekennzeichnet, dass** das Inversionsorgan (34) mindestens einen Hebel (34.11) zur Verstärkung oder zur Reduzierung umfasst, der ein endseitiges Gelenk in Anlage gegen einen translatorisch feststehenden Träger hat.

9. Doppelkupplungsmechanismus nach einem der Ansprüche 1 bis 7, **dadurch gekennzeichnet, dass** das Inversionsorgan (34) mindestens einen hydraulischen Wechsler umfasst.

10. Doppelkupplungsmechanismus nach einem der Ansprüche 1 bis 9, **dadurch gekennzeichnet, dass** er eine Mehrzahl von Inversionsorganen umfasst, die um die Referenzachse verteilt, vorzugsweise gleichmäßig verteilt sind.

11. Doppelkupplungsmechanismus nach einem der vorherigen Ansprüche, **dadurch gekennzeichnet, dass** die zentrale Platte (16) relativ zu einem feststehenden Bezugssystem translatorisch fest ist.

12. Doppelkupplungsmechanismus nach Anspruch 11, **dadurch gekennzeichnet, dass** die zentrale Platte (16) fest verbunden ist mit einem Organ zur Verbindung mit einem einfachen oder doppelten Antriebsschwungrad.

13. Doppelkupplungsmechanismus nach einem der vorherigen Ansprüche, außerdem umfassend eine zwischen die erste Druckplatte (24) und die zentrale Platte (16) zwischen gefügte erste Reibungsscheibe (20), und eine zwischen die zweite Druckplatte (32) und die zentrale Platte (16) zwischen gefügte zweite Reibungsscheibe (22), **dadurch gekennzeichnet, dass** die erste Reibungsscheibe (20) drehfest mit einer ersten Welle (12) verbunden und die zweite Reibungsscheibe (22) drehfest mit einer zweiten Welle (14) verbunden ist, wobei eine der ersten und zweiten Welle eine Hohlwelle (12) ist, in deren Innerem zumindest ein Teil der anderen (14) der ersten und zweiten Welle angeordnet ist.

14. Doppelkupplungsmechanismus nach Anspruch 13, **dadurch gekennzeichnet, dass** die zentrale Platte (16) unter Zwischenfügung eines Lagers (18) auf einer der ersten und zweiten Welle montiert ist.

15. Doppelkupplungsmechanismus nach einem der vorherigen Ansprüche, **dadurch gekennzeichnet, dass** er ein erstes drehendes Längslager (26) umfasst, das kinematisch zwischen das erste Steuerorgan (28) und die erste Druckplatte (24) zwischen gefügt ist.

16. Doppelkupplungsmechanismus nach einem der vorherigen Ansprüche, **dadurch gekennzeichnet, dass** er ein zweites drehendes Längslager (40) umfasst, das kinematisch zwischen das zweite Steuerorgan (42) und die zweite Druckplatte (32) zwischen gefügt ist.

17. Doppelkupplungsmechanismus nach den Ansprüchen 15 und 16, **dadurch gekennzeichnet, dass** eines der beiden drehenden Längslager radial außerhalb des anderen angeordnet ist.

18. Doppelkupplungsmechanismus nach den Ansprüchen 16 und 17, **dadurch gekennzeichnet, dass** er außerdem eine hydraulische SteuerUntergruppe (31) umfasst, die ein Gestell (30) aufweist, welches eine erste und eine zweite zueinander koaxiale ringförmige Kammer (30.1, 30.2) bildet, wobei ein erster ringförmiger Kolben (28) axial in der ersten Kammer (30.1) gleitet und translatorisch fest mit dem ersten drehenden Längslager (26) ist, und wobei ein zweiter Kolben (42) axial in der zweiten Kammer (30.2) gleitet und translatorisch fest mit dem zweiten drehenden Längslager (40) ist

## Claims

1. Double clutch mechanism (10) comprising a central plate (16) which rotates around a geometric reference axis (100), a first and a second pressure plate (24, 32) which are situated axially on both sides of the central plate (16), the first and second pressure plates (24, 32) being mobile axially in translation relative to the central plate between a disengaged position and an engaged position, the first pressure plate (24) being integral in axial translation with a first control unit, the second pressure plate (32) being connected kinematically to a second control unit, the said mechanism additionally comprises at least one inversion unit (34), in order to transform a displacement in translation of the second control unit in a first axial direction into a displacement of the second pressure plate (32) in a second, opposite axial direction, **characterised in that** the inversion unit is on a side of the central plate opposite the first and second control units.

2. Double clutch mechanism according to claim 1, **characterised in that** the first control unit (28) and the second control unit (42) are axially on the same side of the central plate (16).

3. Double clutch mechanism according to claim 2, **characterised in that** the first control unit (28) and the second control unit (42) are displaced in the same direction, in order to displace respectively the first and second pressure plates (24, 32) from their disengaged position to their engaged position.

4. Double clutch mechanism according to any one of claims 1 to 3, **characterised in that** it comprises a movement transmission element (38) which is mobile axially in order to transmit the movement between the second control unit and the inversion unit (34).

5. Double clutch mechanism according to any one of claims 1 to 4, **characterised in that** the inversion unit (34) has a constant kinematic reduction or amplification ratio.

6. Double clutch mechanism according to any one of claims 1 to 4, **characterised in that** the inversion unit (34) has a variable kinematic reduction or amplification ratio.

7. Double clutch mechanism according to any one of claims 1 to 6, **characterised in that** the inversion unit (34) comprises at least one lever.

8. Double clutch mechanism according to any one of claims 1 to 7, **characterised in that** the inversion unit comprises at least one amplification or reduction lever (34.11) with an end articulation supported against a support (38) which is fixed in translation.

9. Double clutch mechanism according to claims 1 to 7, **characterised in that** the inversion unit (34) comprises at least one hydraulic inverter.

10. Double clutch mechanism according to any one of claims 1 to 9, **characterised in that** it comprises a plurality of inversion units which are distributed, preferably equidistantly, around the reference axis.

11. Double clutch mechanism according to any one of the preceding claims, **characterised in that** the central plate (16) is fixed in translation relative to a fixed reference point.

12. Double clutch mechanism according to claim 11, **characterised in that** the central plate (16) is integral with a unit for connection to a single or double engine flywheel.

13. Double clutch mechanism according to any one of the preceding claims, additionally comprising a first friction disc (20) which is interposed between the first pressure plate (24) and the central plate (16), and a second friction plate (22) which is interposed between the second pressure plate (32) and the central plate (16), **characterised in that** the first friction disc (20) is integral in rotation with a first shaft (12), the second friction disc (22) is integral in rotation with a second shaft (14), one of the first and second shafts being a hollow shaft (12) inside which at least part of the other one (14) of the first and second shafts is disposed.

14. Double clutch mechanism according to claim 13, **characterised in that** the central plate (16) is mounted on one of the first and second shafts by means of a bearing (18).

15. Double clutch mechanism according to any one of the preceding claims, **characterised in that** it comprises a first rotary stop (26) which is interposed kinematically between the first control unit (28) and the first pressure plate (24).

16. Double clutch mechanism according to any one of the preceding claims, **characterised in that** it comprises a second rotary stop (40) which is interposed kinematically between the second control unit (42) and the second pressure plate (24).

17. Double clutch mechanism according to claims 15 and 16, **characterised in that** one of the first and second rotary stops is disposed radially on the exterior of the other.

18. Double clutch mechanism according to claims 16 and 17, **characterised in that** it additionally comprises a hydraulic control sub-assembly (31) comprising a frame (30) which forms a first and second coaxial annular chamber (30.1, 30.2), a first annular piston (28) which slides axially in the first chamber (30.1) and is integral in translation with the first rotary stop (26), and a second piston (42) which slides axially in the second chamber (3.2), and is integral in translation with the second rotary stop (40).
